(19) Europäisches Patentamt

European Patent Office

Office européen des brevets

(11) **EP 1 484 292 A1**

(12) **EUROPEAN PATENT APPLICATION**
published in accordance with Art. 158(3) EPC

(43) Date of publication:
08.12.2004 Bulletin 2004/50

(51) Int Cl.7: **C03C 13/00**, D04H 1/42

(21) Application number: 03731814.4

(86) International application number:
**PCT/JP2003/000519**

(22) Date of filing: 22.01.2003

(87) International publication number:
**WO 2003/062164 (31.07.2003 Gazette 2003/31)**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **23.01.2002 JP 2002013982**

(71) Applicant: **Paramount Glass Manufacturing Co., Ltd.**
**Koriyama-shim, Fukushima 963-8017 (JP)**

(72) Inventors:
• **OTAKI, K.,Koriyama Fact.,Paramount Glass Manuf. Co**
**Koriyama-shi, Fukushima 963-8017 (JP)**

• **YODA, M.,Koriyama Fact.,Paramount GlassManuf. Co**
**Koriyama-shi, Fukushima 963-8017 (JP)**
• **BABA, N.,Koriyama Fact.,Paramount Glass Manuf. Co**
**Koriyama-shi, Fukushima 963-8017 (JP)**
• **HARADA, Y.,Koriyama Fact.,Paramount Glass Co**
**Koriyama-shi, Fukushima 963-8017 (JP)**

(74) Representative: **Crouch, David John Bromhead Johnson,**
**Kingsbourne House,**
**229-231 High Holborn,**
**London WC1V 7DP (GB)**

(54) **GLASS COMPOSITION FOR PREPARING INORGANIC FIBER, METHOD FOR PRODUCTION THEREOF AND FORMED PRODUCT FROM THE INORGANIC FIBER**

(57) A glass composition improves the bio-solubility (solubility to physiological salt water), and is suitable for manufacturing inorganic fiber and a molded product of such inorganic fiber. The glass composition to be used for manufacturing inorganic fiber is characterized by containing $SiO_2$ by 52 to 72 wt%, $Al_2O_3$ by less than 3wt%, MgO by 0 to 7wt%, CaO by 7.5 to 9.5wt%, $B_2O_3$ by 0 to 12wt, BaO by 0 to 4wt%, SrO by 0 to 3.5wt%, $Na_2O$ by 10 to 20.5wt%, $K_2O$ by 0.5 to 4.0wt% and $P_2O_5$ by 0 to 5wt%. The raw material of the glass composition contains cathode ray tube glass and/or liquid crystal glass by 0 to 50wt%.

Printed by Jouve, 75001 PARIS (FR)

## Description

### FIELD OF THE INVENTION

This invention relates to a glass composition to be used for manufacturing inorganic fiber, a molded product of inorganic fiber manufactured by using such a glass composition, and a method of manufacturing such molded product.

### BACKGROUND OF THE INVENTION

Molded product of inorganic fiber such as heat insulating materials made of inorganic fiber, which may be glass fiber, glass wool, ceramic wool, rock wool or the like are being popularly used.

In recent years, it has been found that various diseases of respiratory organs may be triggered when dust of fiber is inhaled by men and accumulated in the lungs. While the real cause of diseases of the respiratory system that are triggered by inorganic fiber such as ceramic wool, rock wool and glass wool is a complex one, the inorganic fiber inhaled to the lungs can be eliminated from the body if it is dissolved to the body fluid in a short period of time, so that the diseases of the respiratory system caused by the fiber may be suppressed or dissolved.

Therefore, from the viewpoint of the influence of inorganic fiber to the health of human body, it is desirable to eliminate the inhaled dust of inorganic fiber from the body before it gives rise to any harmful effect to the body by raising the solubility of the inorganic fiber to the body fluid. More specifically, inorganic fibers that show a high solubility to physiological salt solutions (physiological salt water, or normal saline solution) in a solubility test using such solutions instead of body fluid will be desirable.

Meanwhile, an index value called KI (Krebserzeugender Index) value that is determined as carcinogenic index from the chemical composition of inorganic fiber by means of an arithmetic formula has been adopted in place of a solubility test by Germany and some other EU countries as part of legal restrictions on dangerous substances in an effort for suppressing the problem of inorganic fiber. The KI value is determined by subtracting twice of the content (weight %) of aluminum oxides from the total sum of the contents (weight %) of oxides of sodium, potassium, calcium, magnesium, barium, boron and so on.

Inorganic fiber showing a high KI value as determined in a manner as described above is assessed to be less carcinogenic, whereas inorganic fiber showing a low KI value is assessed to be highly carcinogenic. More specifically, inorganic fiber is assessed to be carcinogenic if it is taken in by a small amount and shows a KI value lower than 30, and if taken in by a large amount and shows a KI value between 30 and 40, whereas inorganic fiber is assessed to be non-carcinogenic if it is taken in by a large amount and shows a KI value of 40 or more. However, it should be noted that the KI value is one of a number of currently available assessment techniques. Even if inorganic fiber shows a low KI value, the fiber shows a high solubility (bio-solubility) to physiological salt water, such fiber may be easily eliminated from the human body and hence not harmful to the body, although the KI value is regarded as important when assessing the carcinogenicity of inorganic fiber.

Inorganic fiber for manufacturing molded inorganic fiber products such as glass wool thermal insulators needs to be easily manufactured. More specifically, from the viewpoint of the properties of the inorganic fiber and the durability of the manufacturing facility, the glass softening point is preferably low, and the glass viscosity is also low. Additionally, from the viewpoint of the stability of the manufacturing facility and that of operation, the liquidus temperature is preferably low. While a high chemical durability of inorganic fiber per se is desirable, a high chemical durability and a high bio-solubility contradict each other.

Furthermore, a vast amount of glass wastes produced from cathode ray tubes of television sets and those of computer displays as well as wastes of liquid crystal glass are currently being produced to give rise to a serious problem of waste disposal. At the same time, such glass wastes are desired to be recycled from the viewpoint of effective utilization of resources.

Finally, since inorganic fiber and molded products of inorganic fiber are being manufactured on a mass production basis, it is desired to lower the manufacturing cost.

### SUMMARY OF THE INVENTION

In view of the above identified circumstances, it is therefore an object of the present invention to provide a glass composition suitably used for manufacturing inorganic fiber and molded products thereof, which shows a high bio-solubility so that it may not exert any harmful effect on the human body. In other words, an object of the present invention is to provide a glass composition with both chemical durability and bio-solubility which contradict each other. Another object of the present invention is to provide a glass composition to be used for manufacturing inorganic fiber that does not adversely affect the human body and is suitable for manufacturing molded products at low cost by utilizing glass wastes of cathode ray tubes or liquid crystal glass for the purpose of effective use of resources.

In an aspect of the present invention, the above objects are achieved by providing a glass composition to be used for manufacturing inorganic fiber, containing $SiO_2$ by 52 to 72 wt%, $Al_2O_3$ by less than 3wt%, MgO by 0 to 7wt%, CaO by 7.5 to 9.5wt%, $B_2O_3$ by 0 to 12wt, BaO by 0 to 4wt%, SrO by 0 to 3.5wt%, $Na_2O$ by 10 to 20.5wt%, $K_2O$ by 0.5 to 4.0wt% and $P_2O_5$ by 0 to 5wt%.

$B_2O_3$ may be essential, in other words, the glass composition may contain $B_2O_3$ by 0.1 to 12wt%.

$B_2O_3$, BaO and SrO may be essential. In other words, the glass composition may contain $B_2O_3$ by 0.1 to 12wt%, BaO by 0.1 to 4.0wt%, SrO by 0.1 to 3.5wt%. If $P_2O_5$ is essential, it is desirable that a glass composition according to the invention contains $P_2O_5$ by 0.1 to 5wt%.

$B_2O_3$ may be essential. In other words, the glass composition may contain $B_2O_3$ by 0.1 to 12wt%, and has the KI value of 40 or more. The KI value is obtained by formula

$$KI = (Na_2O + K_2O + CaO + MgO + BaO + B_2O_3) - 2 \times Al_2O_3,$$

where the molecular formulas represents the respective contents expressed by wt%.

No $B_2O_3$ may be contained, BaO and SrO may be essential. In other words, the glass composition may contain BaO by 0.1 to 4.0wt% and SrO by 0.1 to 3.5wt%.

In another aspect of the invention, there is provided the glass composition which raw material of the glass composition contains cathode ray tube glass and/or liquid crystal glass by 0 to 50wt%, preferably 8 to 50wt%.

In still another aspect of the invention, there is provided a method of manufacturing a molded product of inorganic fiber, comprising:

melting the glass composition according to one of claims 1-8 in a melting furnace;
fining the molten glass composition into fine glass fiber in a fiberizing apparatus;
blowing an adhesive agent (binder) to the glass fiber to provide it with shape stability and load characteristics;
molding the glass fiber into the inorganic fiber molding having a predetermined density and a predetermined thickness by means of a fiber condenser and a dryer; and
subsequently cutting the molding to produce a finished product.

In still another aspect of the invention, there is provided a molded product of inorganic fiber manufactured by the above-described method.

PREFERRED EMBODIMENTS OF THE INVENTION

A glass composition to be used for manufacturing inorganic fiber according to the invention contains $SiO_2$ by 52 to 72 wt%, $Al_2O_3$ by less than 3wt%, MgO by 0 to 7wt%, CaO by 7.5 to 9.5wt%, $B_2O_3$ by 0 to 12wt, BaO by 0 to 4wt%, SrO by 0 to 3.5wt%, $Na_2O$ by 10 to 20.5wt%, $K_2O$ by 0.5 to 4wt% and $P_2O_5$ by 0 to 5wt%.

The glass composition may contain $B_2O_3$ by 0.1 to 12wt%.

The glass composition may contain $B_2O_3$ by 0.1 to 12wt, BaO by 0.1 to 4.0wt%, SrO by 0.1 to 3.5wt%.

The glass composition may contain $B_2O_3$ by 0.1 to 12wt% (provided that the KI value is 40 or more).

The glass composition may contain no $B_2O_3$, and may contain BaO by 0.1 to 4.0wt% and SrO by 0.1 to 3.5wt%.

**<$SiO_2$>**

If the $SiO_2$ content is less than 52wt%, the chemical durability of the glass wool product is unnecessarily degraded, so that the glass composition is not suitable for manufacturing inorganic fiber. In addition, cullet contains a lot of $SiO_2$. Thus, if only cullet is used as raw material, generally the $SiO_2$ content tends to become 52wt% or more. If, on the other hand, $SiO_2$ is contained by more than 75wt%, the KI value and the solubility to physiological salt water are reduced. Additionally, if the $SiO_2$ content exceeds 75wt%, the softening point of the produced glass composition rises to make it hardly melt and raise the glass viscosity. Thus, it is difficult to manufacture inorganic fiber from such glass composition.

**< $Al_2O_3$>**

If the $Al_2O_3$ content is 3wt% or more, the chemical durability of the inorganic fiber made of the glass composition is raised unnecessarily to by turn remarkably reduce the solubility to physiological salt water. The glass composition may not contain $Al_2O_3$. Alternatively, it may contain $Al_2O_3$ by less than 3wt%.

**<CaO and MgO>**

The glass composition contains CaO by 7.5 to 9.5wt% and MgO by 0 to 7wt%.

If the CaO content is less than 7.5wt%, both the solubility of the glass composition to physiological salt water and the liquidus temperature are low, but the glass viscosity becomes too high for the glass composition to be used for manufacturing inorganic fiber. Furthermore, the contents of the ingredients other than CaO are inevitably raised to by turn push up the cost. If the CaO content exceeds 9.5wt%, the liquidus temperature is raised, so that the glass composition is no longer suitable for manufacturing inorganic fiber.

If the MgO content is 0.1wt% or more, it can inhibit the glass viscosity and the liquidus temperature from increasing. However, other gradient also inhibits the glass viscosity. Thus, MgO is not essential. If the MgO content exceeds 7wt%, the glass viscosity becomes too high, so that the glass composition is no longer suitably for manufacturing inorganic fiber.

**<BaO and SrO>**

The glass composition contains BaO by 0 to 4wt% and SrO by 0 to 3.5wt%. Alternatively, it may contain BaO by 0.1 to 4.0wt% and SrO by 0.1 to 3.5wt%.

The BaO content increases the bio-solubility of the glass composition. Additionally, both of the BaO content and the SrO content decreases the glass viscosity and the glass softening point of the glass composition, to easily produce inorganic fiber. BaO and SrO do not increase the liquidus temperature unlike BaO, and also do not increase the glass viscosity unlike MgO, so as to easily produce inorganic fiber. For these reasons, it is preferable to contain BaO and SrO. When BaO by 0.1wt% and SrO by 0.1wt% are included, the bio-solubility increases.

However, it should be noted that the bio-solubility, the glass viscosity, the glass softening point and the liquidus temperature are not determined only by the BaO content, and relate to the contents of the other ingredients. Thus, it is not required that BaO is essential.

When the BaO content of the glass composition exceeds 4wt%, the chemical durability is decreased so that it is no longer suitable for manufacturing inorganic fiber, although the solubility of the glass relative to physiological salt water is increased.

If the SrO content exceeds 3.5wt%, the solubility of the glass composition to the physiological salt water is decreased.

**< Na$_2$O and K$_2$O>**

The glass composition contains Na$_2$O by 10 to 20.5wt% and K$_2$O by 0.5 to 4wt%.

If the Na$_2$O content is below 10wt%, the solubility of the glass composition to physiological salt water becomes too low, and the content of other ingredients needs to be increased to consequently raise the cost. If, on the other hand, the Na$_2$O content exceeds 20.5wt%, the chemical durability of the glass composition is decreased so that the composition is no longer suitable for manufacturing inorganic fiber, although the solubility to physiological salt water is increased.

If the K$_2$O content is below 0.5wt%, the glass viscosity of the glass composition increases to lower the operating efficiency of the glass-fiberizing apparatus. If, on the other hand, K$_2$O exceeds 4wt%, the furnace is eroded excessively to shorten the service life of the furnace and to increase the repairing cost of the furnace. Thus, it will not be possible to manufacture inorganic fiber at low cost.

**< P$_2$O$_5$>**

Since P$_2$O$_5$ improves the thermal resistance of glass, it operates effectively when its content is 0.1wt% or more. However, the thermal resistance of glass can be obtained by some other ingredients, it is not required that P$_2$O$_5$ is essential. If, the P$_2$O$_5$ content exceeds 5wt%, the bio-solubility of the glass composition is decreased, and the glass softening point is too increased, so that the fiberizing is difficult.

**< B$_2$O$_3$>**

The glass composition contains B$_2$O$_3$ by 0 to 12wt%, preferably, by 0.1 to 12wt%. However, the glass composition may not contain B$_2$O$_3$ at all.

B$_2$O$_3$ increases the bio-solubility. Thus, it is preferable to contain B$_2$O$_3$ by 0.1wt% or more. The bio-solubility is increased when the B$_2$O$_3$ content is 0.1wt% or more.

However, the bio-solubility is not determined only by the B$_2$O$_3$ content, and relate to the contents of the other ingredients. Thus, it is not required that $B_2O_3$ is essential. Particularly, borax $Na_2B_4O_7 \cdot nH_2O$ that is the raw material of boron oxide is expensive, and the cost of manufacturing the glass composition will inevitably be increased if much borax is used. The present invention aims to increase the bio-solubility and to decrease the manufacturing cost.

Particularly, when $B_2O_3$ is not contained and BaO is essential, the bio-solubility of a glass composition is increased by using BaO instead of costly boron oxide.

When the $B_2O_3$ content exceeds 12wt%, the chemical durability would be decreased, and the manufacturing cost is increased.

### <Others>

In addition to the above ingredients, the glass composition according to the invention may contain zinc oxide, lithium oxide, zirconium oxide, titanium dioxide, triiron tetraoxide, iron oxide, antimony trioxide and/or lead oxide. These additional ingredients are made to be contained by taking the quality (restoration ratio) of the inorganic fiber and the molded product made of such inorganic fiber derived from the glass composition into consideration.

### <Bio-solubility and KI value>

The glass composition having the above described composition shows bio-solubility. The expression of "bio-solubility" refers to the solubility of glass composition to human body fluid. The bio-solubility is determined by observing the solubility to physiological salt water. If the bio-solubility is high, the inorganic fiber can be easily dissolved into human body fluid. Thus, even if dust of inorganic fiber is inhaled to a lung or chest, it is dissolved into human body fluid, so that it is eliminated from the human body before it exerts any harmful effect on the human body.

The KI value is a reference of the bio-solubility and arithmetically determined from the composition of glass. However, glass contains various oxides, and interactions of various oxides may also affect the bio-solubility of glass, so that the KI value is not linearly proportional to the solubility of glass to physiological salt water. To prevent inorganic fiber from exerting any harmful effect on the human body, the solubility of inorganic fiber to physiological salt water is mainly taken into consideration for the purpose of the invention.

From the viewpoint of harmful effect on the human body, it is desirable that inorganic fiber shows a high bio-solubility. However, a high bio-solubility means a poor chemical stability. In other words, if the glass composition showing an excessively high bio-solubility, such inorganic fiber and a molded product thereof can be poorly durable.

The present invention is invented under the consideration of both the bio-solubility and the durability which contradict each other. While the bio-solubility of the inorganic fiber (or the solubility to physiological salt water) can vary enormously depending on the composition of the glass, it needs to be at least 4.5wt%. In the case of the glass composition containing no $B_2O_3$, the bio-solubility is preferably 4.5wt% or more, more preferably 5.59wt% or more. In the case of the glass composition containing $B_2O_3$, the bio-solubility is preferably 7wt% or more.

### <Raw material>

The raw material of the glass composition having the composition as described above may be all cullet, or a cullet with a batch material (feldspar, dolomite, soda ash, borax, etc.). It may be an all batch material.

Cullet to be use for the purpose of the invention may be plate glass cullet or bottle glass cullet. Cullet of glass table ware and/or glass art may be added. Additionally, it is preferable to use cullet of cathode ray tube glass and/or liquid crystal glass. For the purpose of the present invention, cathode ray tube glass is not limited to glass used for television sets, and may be cathode ray tube glass used for displays of personal computers. Again, liquid crystal glass is not limited to glass used for television sets and may be liquid crystal glass used for displays of personal computers. Cathode ray tube glass and liquid crystal glass contain barium oxide BaO and strontium oxide SrO, which prevent the glass softening point and the glass viscosity from decreasing and prevent the liquidus temperature from increasing.

Preferably, the material contains cullet of cathode ray tube glass and/or liquid crystal glass by 0 to 50wt%. If the cullet content exceeds 50wt%, the SrO content becomes too high to by turn excessively increase the chemical durability and decrease the bio-solubility.

More preferably, the material contains cutlet of cathode ray tube glass and/or liquid crystal glass by 8 to 50wt%. If the cullet content is less than 8wt%, BaO and SrO are insufficient. Although the necessary amount of BaO and SrO can be obtained by adding a batch material, the manufacturing cost will be increased.

The cullet of cathode ray tube glass and/or liquid crystal glass shows an average particle size of 5 to 60mm. However, the present invention does not exclude the use of cullet showing an average particle size less than 5mm or more than 60mm.

The use of cullet of cathode ray tube glass and/or liquid crystal glass contributes to effective recycling of resources, reduce the manufacturing cost of the glass composition, the inorganic fiber and the molded product.

**<Method of preparing a glass composition according to the invention>**

A method as described below may be used to prepare the glass composition. The raw materials (namely, plate glass cullet, bottle glass cullet, a batch material and, if necessary, cullet of cathode ray tube glass and/or liquid crystal glass) are fed to respective silos/storage tanks by means of conveyors and/or air shoots, and stored in them. Then, a necessary amount of each of the raw materials (the cullet and/or the batch material) is measured by a gauge, and fed to a mixing silo by an air shoot. The metered and transferred raw materials are mixed in the mixing silo to prepare the glass composition. The prepared glass composition is then transferred to a feed silo arranged in front of a glass melting furnace.

**<Method of manufacturing inorganic fiber>**

Glass fiber, glass wool, rock wool and so on can be manufactured from the above described glass composition. Particularly, a known technique such as centrifugal method or flame method may be used when manufacturing glass wool.

**<Method of manufacturing molded product of inorganic fiber>**

A molded product of inorganic fiber, glass wool in particular, that can be used as thermal insulator and sound absorber can be manufactured from the inorganic fiber, glass wool in particular.

When manufacturing the glass wool molded product, it is preferable to use an adhesive agent as binder/adhesive in order to maintain the shape of the molded product and provide the molded product with desired load characteristics. The adhesive agent contains thermosetting resin such as phenol resin that operates as organic binder. Alternatively the adhesive agent may contain some other thermosetting resin, epoxy or melamine. Still alternatively, an inorganic binder may be used.

The binder/adhesive is blown to fined molten glass to an adhering ratio of about 5%. Any appropriate known blowing method may be used for the purpose of the invention.

The density of the glass wool molded product is normally between 7 and 300Kg/m3, although it may vary depending on the characteristics required to it when it is used as thermal insulator or sound absorber.

As for the dimensions of the glass wool molded product, it is normally 12 to 300mm of thickness, 260 to 1,100mm of width and 605 to 22,000mm of long, although the present invention is by no means limited to these numerical values.

If necessary, a facing material may be applied to the surface of the glass wool molded product obtained in a manner as described above. A known appropriate material such as a glass cloth, vinyl chloride, an organic unwoven cloth and so on may be used for the facing material. The facing material can be bonded to the surface by any known technique, such as a hot-melt type adhesive or an organic solvent type adhesive.

## Example 1

A 67.5wt% of plate glass and bottle glass cullet, a 10wt% of cullet of television set cathode ray tube glass, a 10wt% of cullet of liquid crystal glass, and a 12.5wt% of a batch material were put together, stirred, mixed and molten to obtain a glass composition as shown in Table 1 below. The average particle size of the cullet was 5 to 60mm.

After cooling, the glass composition was crushed to particles not larger than 180 microns. A 1g of the crushed glass was put into a triangular flask. Then, a 150ml of physiological salt water was poured into the flask, and the flask was left in a warm bath at $40\pm1°$ C for 50 hours. Thereafter, the content of the flask was filtered, and the residue was weighed to determine the reduced amount, to obtain the solubility. The obtained result is also shown in Table 1.

The obtained glass composition was molten. The molten glass was forced to flow out through a large number of holes of a centrifugal fiberizing apparatus, to produce fine filaments as glass wool. The viscosity, the softening point and the liquidus temperature of the molten glass are also shown in Table 1. The viscosity is expressed as the temperature when the glass showed the viscosity of 10,000 poises.

A glass wool molded product and a glass wool thermal insulator were prepared by using the glass wool obtained in a manner as described above. A phenol type adhesive agent (binder) was made to adhere to the glass wool to an adhering ratio of 5% in order to provide it with shape stability and load characteristics. The glass wool with the binder was collected by a fiber collector, dried, and cut to a piece of 10kg/m3 $\times$ 50mm $\times$ 430mm $\times$ 1,370mm to obtain a glass wool molded product.

An aluminum-deposited polyethylene film was bonded to an upper surface of the obtained glass wool molded product by means of a hot melt type adhesive agent, to obtain a glass wool thermal insulator.

The obtained glass wool thermal insulator was compressed to 87% by volume, and held to the compressed state for 1 month and 3 months, after the elapse of each of which the restoration rate was observed. The restoration rate was obtained by releasing the insulator from the compressed state, and gauging the thickness of the insulator four hours thereafter. The obtained restoration ratio is also shown in Table 1.

### Comparative Example 1

A glass composition, glass wool and a glass wool thermal insulator were prepared by following the process of Example 1 except that the composition as shown in Table 1 was obtained by using a 70wt% of flat glass and bottle glass cullet and a 30wt% of a batch material as raw material.

Example 1 and Comparative Example 1 will be compared each other and discussed. In Example 1, cullet of cathode ray tube glass of television sets and liquid crystal glass were added. Thus, the content of aluminum oxide is low while the products of Example 1 contained BaO and SrO that were derived from the cathode ray tube glass and the liquid crystal glass.

The solubility of the glass composition of Example 1 is higher than that of the glass composition of Comparative Example 1 by 33%. In other words, the bio-solubility of the glass composition of Example 1 was remarkable improved.

Additionally, the viscosity of Example 1 was largely improved by 40° C, and the softening point of Example 1 was also largely improved by 35° C, so as to easily fiberize the glass.

### Example 2

A glass composition, glass wool and a glass wool thermal insulator were prepared by following the process of Example 1 except that the composition as shown in Table 1 was obtained by using a 62wt% of plate glass and bottle glass cullet, a 21wt% of cullet of cathode ray tube glass of television sets and a 17wt% of a batch material as raw material.

The solubility of Example 2 showed a remarkable improvement relative to that of Comparative Example 1.

### Example 3

A glass composition, glass wool and a glass wool thermal insulator were prepared by following the process of Example 1 except that the composition as shown in Table 1 was obtained by using a 72.7% of plate glass and bottle glass cullet, a 10wt% of cullet of cathode ray tube glass of television sets, and a 17.3wt% of a batch material as raw material.

The solubility of Example 3 showed an improvement relative to that of Comparative Example 1.

When manufacturing glass wool in Example 3, the temperature at 10,000 poises was 925° C, and the liquidus temperature was as low as 915° C, so as to easily fiberize the glass. In other words, the glass composition of Example 3 was found to be suitable for manufacturing inorganic fiber.

Additionally, the restoration ratio of the glass wool thermal insulator prepared from the glass composition of Example 3 was 120% after the elapse of a month and 116% after the elapse of 3 months, to prove a remarkable improvement relative to 118% after the elapse of a month and 112% after the elapse of 3 months in Comparative Example 1. The restoration ratio greatly influences the thickness of the product when the packed product is unpacked, and also the touch and the flexibility (resiliency) of the unpacked product. The glass wool thermal insulator manufactured from the glass composition of Example 3 showed a remarkably improved quality, to prove that the glass composition of Example 3 is very suited to molded products of inorganic fiber.

Table 1

|  | Example 1 | Comparative Example 1 | Example 2 | Example 3 |
|---|---|---|---|---|
| RAW MATERIAL (wt%) |  |  |  |  |
| flat/bottle glass cullet | 67.5 | 70.0 | 62.0 | 72.7 |
| Gullet of CRT glass | 10.0 | 0 | 21.0 | 10.0 |
| cullet of liquid crystal glass | 10.0 | 0 | 0 | 0 |
| batch material | 12.5 | 30.0 | 17.0 | 17.3 |
| GLASS COMPOSITION (wt%) |  |  |  |  |
| $SiO_2$ | 58.32 | 62.61 | 59.49 | 62.72 |
| $Al_2O_3$ | 2.68 | 4.03 | 2.08 | 2.69 |
| CaO | 8.01 | 7.33 | 8.80 | 7.79 |

EP 1 484 292 A1

Table 1 (continued)

|  | Example 1 | Comparative Example 1 | Example 2 | Example 3 |
|---|---|---|---|---|
| GLASS COMPOSITION (wt%) |  |  |  |  |
| MgO | 3.35 | 2.67 | 1.95 | 1.13 |
| $Na_2O$ | 17.41 | 14.77 | 15.28 | 14.64 |
| $K_2O$ | 1.17 | 2.45 | 2.09 | 1.88 |
| $Fe_2O_3$ | 0.475 | 0.725 | 0.466 | 0.153 |
| $B_2O_3$ | 2.64 | 4.71 | 0.89 | 4.34 |
| BaO | 2.38 | 0 | 2.21 | 0.95 |
| SrO | 1.68 | 0 | 2.01 | 1.30 |
| $P_2O_5$ | 1.35 | 0 | 1.01 | 1.18 |
| others | 0.535 | 0.705 | 0.724 | 1.227 |
| KI value | 29.60 | 23.87 | 28.35 | 25.35 |
| solubility (wt%) | 7.591 | 5.717 | 6.676 | 6.450 |
| viscosity (° C) | 885 | 925 | 905 | 925 |
| softening point (° C) | 615 | 650 | 630 | 650 |
| liquidus temperature(° C) | 915 | 915 | 910 | 915 |
| product restoration ratio |  |  |  |  |
| after 1 month | 117% | 118% | 118% | 120% |
| after 3 months | 111% | 112% | 112% | 116% |

## Example 4

A glass composition, glass wool and a glass wool thermal insulator were prepared by following the process of Example 1 except that the composition as shown in Table 2 was obtained by using a 90% of plate glass and bottle glass cullet and a 10wt% of cullet of cathode ray tube glass of television sets as raw material. The obtained results are shown in Table 2 below.

Note that both the glass composition of Example 4 and that of Comparative Example 2, which will be described hereinafter, do not contain $B_2O_3$. Thus, the KI values thereof were determined by subtracting twice of the content of oxides of aluminum from the content (wt%) of the oxides of sodium, potassium, calcium, magnesium and barium.

## Comparative Example 2

Comparative Example 2 shows that the bio-solubility is improved when BaO and SrO are contained, if compared with Example 4.

A glass composition, glass wool and a glass wool thermal insulator were prepared by following the process of Example 1 except that the composition as shown in Table 2 was obtained by using a 100% of plate glass and bottle glass cullet as raw material. The obtained results are shown in Table 2 below.

Table 2

|  | Example 4 | Comparative Example 2 |
|---|---|---|
| RAW MATERIAL (wt%) |  |  |
| flat/bottle glass cullet | 90.0 | 100.0 |
| cullet of CRT glass | 10.0 |  |
| GLASS COMPOSITION (wt%) |  |  |
| $SiO_2$ | 70.23 | 70.28 |
| $Al_2O_3$ | 1.72 | 1.76 |
| CaO | 8.38 | 8.84 |
| MgO | 2.75 | 2.92 |
| $Na_2O$ | 13.52 | 13.98 |

8

Table 2   (continued)

|  | Example 4 | Comparative Example 2 |
|---|---|---|
| GLASS COMPOSITION (wt%) |  |  |
| $K_2O$ | 1.21 | 0.68 |
| $Fe_2O_3$ | 0.747 | 0.881 |
| BaO | 0.45 |  |
| SrO | 0.46 |  |
| others | 0.533 | 0.659 |
| KI value | 22.87 | 22.90 |
| solubility (wt%) | 5.591 | 5.578 |
| viscosity (° C) | 1034 | 1035 |
| softening point (° C) | 725 | 725 |
| liquidus temperature(° C) | 1010 | 1040 |
| product restoration ratio |  |  |
| after 1 month | 118% | 117% |
| after 3 months | 116% | 115% |

In the Example 4 and the Comparative Example 2, contained $B_2O_3$ was not contained. Thus, they showed a low bio-solubility if compared with Examples 1-3 and Comparative Example 1. However, it will be appreciated that the bio-solubility of Example 4 is improved if compared with that of Comparative Example 2. It will be safe to assume that this improvement is derived from the barium oxide contained in the cullet of cathode ray tube glass.

What is more important is that the liquidus temperature of Example 4 was made lower than that of Comparative Example 2 by 30° C, so as to easily make inorganic fiber (fiberization). It may be safe to assume that this effect is derived from the barium oxide contained in the cathode ray tube glass, and barium oxide has an effect of preventing the liquidus temperature from rising.

In the Comparative Example 2, the glass showed 10000 poises at 1035° C, and the liquidus temperature was 1040° C which was higher than 1035° C. Thus, it was difficult to fiberize the glass in the Comparative Example 2. On the other hand, in the Example 4, although the glass showed 10000 poises at 1034° C which was similar to the viscosity in Comparative Example 2, the liquidus temperature was 1010° C which was low. Thus, in the Example 4, the glass was easily fiberized. In other words, the glass composition of Example 4 was found to be suitable for manufacturing inorganic fiber if compared with the glass composition of Comparative Example 2.

The restoration ratio of the glass wool thermal insulator manufactured according to Example 4 was better than that according to Comparative Example, 2 to evidence that the glass wool thermal insulator of Example 4 had a better quality. It may be safe to assume that this is derived from the strontium oxide contained in the cathode ray tube glass, which can improve the durability like aluminum oxide.

Unlike Examples 1-3, the glass composition of Example 4 did not contain $B_2O_3$ at all, but showed a numerical mechanical durability substantially same as those of the other examples. Thus, it was confirmed that the glass composition of Example 4 is suitable for manufacturing a molded product of inorganic fiber.

**Examples 5 - 7**

Glass wool and a molded product of glass wool were prepared by following the process of Example 1 except that a 57.0% of plate glass and bottle glass cullet, a 10.6wt% of cullet of cathode ray tube glass of television sets and a 32.4wt% of a batch material were used as raw material in Example 5, a 56.0% of plate glass and bottle glass cullet, a 12.0wt% of cullet of liquid crystal glass and a 32.0wt% of a batch material were used as raw material in Example 6, and a 59% of plate glass and bottle glass cullet and a 41wt% of a batch material were used as raw material in Example 7. The ingredients were put together, stirred and mixed to obtain the respective glass compositions as listed in Table 3.

Table 3

|  | Example 5 | Example 6 | Example 7 |
|---|---|---|---|
| RAW MATERIAL (wt%) |  |  |  |
| flat/bottle glass cullet | 57.0 | 56.0 | 59.0 |

Table 3   (continued)

| | Example 5 | Example 6 | Example 7 |
|---|---|---|---|
| RAW MATERIAL (wt%) | | | |
| cullet of CRT glass | 10.6 | | |
| cullet of liquid crystal glass | | 12.0 | |
| batch material | 32.4 | 32.0 | 41.0 |
| GLASS COMPOSITION (wt%) | | | |
| $SiO_2$ | 52.35 | 53.49 | 56.00 |
| $Al_2O_3$ | 1.30 | 1.50 | 1.05 |
| CaO | 8.80 | 9.10 | 9.00 |
| MgO | 2.07 | 3.40 | 2.06 |
| $Na_2O$ | 18.80 | 19.20 | 19.34 |
| $K_2O$ | 1.45 | 0.51 | 0.70 |
| $Fe_2O_3$ | 0.122 | 0.613 | 0.126 |
| $B_2O_3$ | 10.50 | 10.50 | 11.00 |
| BaO | 1.09 | 0.33 | 0 |
| SrO | 1.50 | 0.20 | 0 |
| $P_2O_5$ | 1.15 | 0 | 0 |
| others | 0.868 | 1.157 | 0.724 |
| KI value | 40.11 | 40.04 | 40.00 |
| solubility (wt%) | 25.097 | 25.033 | 24.913 |
| viscosity (° C) | 835 | 835 | 830 |
| softening point (° C) | 565 | 565 | 560 |
| liquidus temperature(° C) | 913 | 915 | 920 |
| product restoration ratio | | | |
| after 1 month | 116% | 115% | 115% |
| after 3 months | 111% | 111% | 111% |

The solubility values of Examples 5-7 were very high. Although the chemical durability may be lowered by a high solubility, the SrO content of Example 5 and that of Example 6 prevent the chemical durability from decreasing excessively.

While a raw material containing cullet of cathode ray tube glass or that of liquid crystal glass was used in Example 5 and 6, the raw material of Example 7 contained neither cullet of cathode ray tube glass nor that of liquid crystal glass. While not only the solubility but also the softening point, the liquidus temperature, the solubility and the restoration rate of the product were similar in Examples 5-7, the glass composition manufacturing cost of Example 5 and that of Example 6 were as low as about two thirds of the glass composition manufacturing cost of Example 7, because cullet of cathode ray tube glass or that of liquid crystal glass was used in the former examples. In other words, these examples evidenced that the use of cullet of cathode ray tube glass and/or that of liquid crystal glass can significantly reduce the manufacturing cost. While the solubility in each of Examples 5-7 was very high, the glass composition manufacturing cost was about 200% higher than that of any of Examples 1-4.

According to the present invention, since the glass composition has specifically defined contents of ingredients (contains $SiO_2$ by 52 to 72 wt%, $Al_2O_3$ by less than 3wt%, MgO by 0 to 7wt%, CaO by 7.5 to 9.5wt%, $B_2O_3$ by 0 to 12wt, BaO by 0 to 4wt%, SrO by 0 to 3.5wt%, $Na_2O$ by 10 to 20.5wt%, $K_2O$ by 0.5 to 4.0wt% and $P_2O_5$ by 0 to 5wt%.), the bio-solubility is improved, and has a desired level of chemical durability. Also, the glass viscosity, the glass softening point and the liquidus temperature thereof are reduced, so as to easily fiberize the glass. Therefore, according to the invention, there is provided the glass composition to be used for manufacturing inorganic fiber at low cost.

In addition to the above described advantages, there is provided the glass composition showing a high bio-solubility, if $B_2O_3$, which improves bio-solubility, is essential.

If $B_2O_3$, BaO and SrO are essential, there is provided the glass composition which liquidus temperature, glass softening point and glass viscosity are decreased, so as to easily fiberize the glass. Additionally, since BaO is essential, its bio-solubility is increased.

If $P_2O_5$ is essential, the thermal resistance is improved in addition to the above.

If $B_2O_3$ is essential and has KI value of 40 or more, there is provided the glass composition with a very high bio-solubility.

If BaO and SrO are essential instead of $B_2O_3$, the liquidus temperature, the glass softening point and the glass viscosity are decreased, so as to easily fiberize the glass. In addition, BaO is essential, its bio-solubility is accordingly increased.

If the raw material of the glass composition contains cathode ray tube glass and/or liquid crystal glass by 0 to 50wt%, cullet of cathode ray tube glass and that of liquid crystal glass can be effectively used as resources, and the glass composition can be obtained without difficulty because of BaO and SrO contained in them.

Finally, the manufacturing cost can be reduced, if the raw material contains cullet of cathode ray tube glass and/or that of liquid crystal glass.

**Claims**

1.    A glass composition to be used for manufacturing inorganic fiber, containing $SiO_2$ by 52 to 72 wt%, $Al_2O_3$ by less than 3wt%, MgO by 0 to 7wt%, CaO by 7.5 to 9.5wt%, $B_2O_3$ by 0 to 12wt, BaO by 0 to 4wt%, SrO by 0 to 3.5wt%, $Na_2O$ by 10 to 20.5wt%, $K_2O$ by 0.5 to 4.0wt% and $P_2O_5$ by 0 to 5wt%.

2.    The glass composition according to claim 1, containing $B_2O_3$ by 0.1 to 12wt%.

3.    The glass composition according to claim 2, containing BaO by 0.1 to 4.0wt% and SrO by 0.1 to 3.5wt%.

4.    The glass composition according to claim 3, containing $P_2O_5$ by 0.1 to 5wt%.

5.    The glass composition according to claim 1, containing $B_2O_3$ by 0.1 to 12wt%, and having KI value of 40 or more, said KI value being obtained by formula

$$KI = (Na_2O + K_2O + CaO + MgO + BaO + B_2O_3) - 2 \times Al_2O_3,$$

where the molecular formulas represents the respective contents expressed by wt%.

6.    The glass composition according to claim 1, containing BaO by 0.1 to 4wt%, SrO by 0.1 to 3.5wt%, but not containing $B_2O_3$.

7.    The glass composition according to one of claims 1-6, wherein raw material of the glass composition contains cathode ray tube glass and/or liquid crystal glass by 0 to 50wt%.

8.    The glass composition according to one of claims 1-6, wherein raw material of the glass composition contains cathode ray tube glass and/or liquid crystal glass by 8 to 50wt%.

9.    A method of manufacturing a molded product of inorganic fiber, comprising:

melting the glass composition according to one of claims 1-8 in a melting furnace;
fining the molten glass composition into fine glass fiber in a fiberizing apparatus;
blowing an adhesive agent (binder) to the glass fiber to provide it with shape stability and load characteristics;
molding the glass fiber into the inorganic fiber molding having a predetermined density and a predetermined thickness by means of a fiber condenser and a dryer; and
subsequently cutting the molding to produce a finished product.

10.    A molded product of inorganic fiber manufactured by the method according to claim 9.

<div align="center">

**INTERNATIONAL SEARCH REPORT**

</div>

| | International application No. |
|---|---|
| | PCT/JP03/00519 |

| A. CLASSIFICATION OF SUBJECT MATTER |
|---|
| Int.Cl⁷ C03C13/00, D04H1/42 |

According to International Patent Classification (IPC) or to both national classification and IPC

| B. FIELDS SEARCHED |
|---|
| Minimum documentation searched (classification system followed by classification symbols) |
| Int.Cl⁷ C03C1/00-14/00, D04H1/00-18/00 |

Documentation searched other than minimum documentation to the extent that such documents are included in the fields searched

| Jitsuyo Shinan Koho | 1926–1996 | Toroku Jitsuyo Shinan Koho | 1994–2003 |
|---|---|---|---|
| Kokai Jitsuyo Shinan Koho | 1971–2003 | Jitsuyo Shinan Toroku Koho | 1996–2003 |

Electronic data base consulted during the international search (name of data base and, where practicable, search terms used)
INTERGLAD

| C. DOCUMENTS CONSIDERED TO BE RELEVANT | | |
|---|---|---|
| Category* | Citation of document, with indication, where appropriate, of the relevant passages | Relevant to claim No. |
| X<br>Y<br>A | WO 96/34836 A1 (OWENS CORNING),<br>07 November, 1996 (07.11.96),<br>Claims<br>& JP 10-507993 A<br>Claims<br>& US 5523265 A & EP 768988 B1 | 1-3,5,6,9,<br>10<br>7,8<br>4 |
| X<br>Y<br>A | WO 95/32925 A1 (ISOVER SAINT-GOBAIN),<br>07 December, 1995 (07.12.95),<br>Claims<br>& JP 9-500085 A<br>Claims<br>& DE 4418727 A1 & DE 19503167 A1<br>& EP 711256 B1 | 1-5,9,10<br>7,8<br>6 |

☒ Further documents are listed in the continuation of Box C. ☐ See patent family annex.

| * Special categories of cited documents: | "T" later document published after the international filing date or |
|---|---|
| "A" document defining the general state of the art which is not considered to be of particular relevance | priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 May, 2003 (01.05.03) | 20 May, 2003 (20.05.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
|---|
| PCT/JP03/00519 |

| C (Continuation).  DOCUMENTS CONSIDERED TO BE RELEVANT | | |
|---|---|---|
| Category* | Citation of document, with indication, where appropriate, of the relevant passages | Relevant to claim No. |
| X<br>Y<br>A | WO 95/32927 A1  (ISOVER SAINT-GOBAIN),<br>07 December, 1995 (07.12.95),<br>Claims<br>& JP 9-500086 A<br>Claims<br>& DE 4418726 A1        & DE 4447576 A1<br>& DE 4447577 A1        & EP 738692 A2<br>& EP 711258 B1 | 1,2,5,9,10<br>7,8<br>3,4,6 |
| X<br>Y<br>A | WO 95/32926 A1  (ISOVER SAINT-GOBAIN),<br>07 December, 1995 (07.12.95),<br>Claims<br>& JP 9-501141 A<br>Claims<br>& DE 4418728 A1        & DE 19503171 A1<br>& EP 711257 B1 | 1,2,4,9,10<br>7,8<br>3,5,6 |
| X<br>A | R.M. Potter, "Method for determination of in-vitro<br>fiber dissolution rate by direct optical measurement<br>of diameter decrease" In: Glastech.Ber.Glass Sci.<br>Technol., 2000.02, Vol.73, No.2, pages 46 to 55,<br>the whole document | 1-3<br>4-10 |
| X<br>A | US 4312952 A  (OY PARTEK AB),<br>26 January, 1982 (26.01.82),<br>Claims<br>& JP 56-14450 A<br>Claims<br>& US 4381347 A        & EP 19600 A2 | 1,2<br>3-10 |
| X<br>A | US 4454238 A  (T & N RESEARCH METERIALS LTD.),<br>12 June, 1984 (12.06.84),<br>Claims<br>& FR 2518081 A1        & GB 2111475 A<br>& DE 3245813 A1 | 1<br>2-10 |
| X<br>A | EP 516354 A1  (PILKINGTON INSULATION LTD.),<br>02 December, 1992 (02.12.92),<br>Claims<br>& JP 5-170484 A<br>Claims<br>& GB 2256193 A | 1<br>2-10 |
| X<br>A | US 4345037 A  (PILKINGTON BROTHERS LTD.),<br>17 August, 1982 (17.08.82),<br>Claims<br>& JP 56-134534 A<br>Claims<br>& GB 2071081 A        & DE 3107600 A1 | 1<br>2-10 |
| Y<br>A | JP 2001-348249 A  (Nippon Electric Glass Co., Ltd.),<br>18 December, 2001 (18.12.01),<br>Claims<br>(Family: none) | 7,8<br>1-6,9,10 |

Form PCT/ISA/210 (continuation of second sheet) (July 1998)

## INTERNATIONAL SEARCH REPORT

International application No.

PCT/JP03/00519

| C (Continuation). | DOCUMENTS CONSIDERED TO BE RELEVANT | |
|---|---|---|
| Category* | Citation of document, with indication, where appropriate, of the relevant passages | Relevant to claim No. |
| Y<br>A | JP 61-48438 A   (Asahi Fiber Glass Co., Ltd.),<br>10 March, 1986 (10.03.86),<br>Claims<br>(Family: none) | 7,8<br>1-6,9,10 |

Form PCT/ISA/210 (continuation of second sheet) (July 1998)